# NEUE EUROPÄISCHE PATENTSCHRIFT

(11) **EP 0 826 728 B2**
(45) Veröffentlichungstag und Bekanntmachung des Hinweises auf die Entscheidung über den Einspruch: **20.08.2008**
(45) Hinweis auf die Patenterteilung: 21.06.2000
(21) Anmeldenummer: 97114544.6
(22) Anmeldetag: 22.08.1997
(51) Int. Cl.: C08L 23/12, C08L 23/16, C08K 3/34

(54) **Weissbrucharme, zähmodifizierte Propylenpolymerisate**
Impact-modified propylene polymers with reduced stress-whitening
Polymères de propylène résistant aux chocs avec rupture blanche réduite

(30) Priorität: 02.09.1996 DE 19635503
(43) Veröffentlichungstag der Anmeldung: 04.03.1998
(73) Patentinhaber: Basell Poliolefine Italia S.r.l., 20124 Milano (IT)
(72) Erfinder: Seelert, Stefan, Dr., 67227 Frankenthal (DE); Rümpler, Klaus-Dieter, Dr., 67157 Wachenheim (DE)
(74) Vertreter: Luderschmidt, Schüler & Partner

(56) Entgegenhaltungen:
- EP-A- 0 605 180
- WO-A-96/06132
- DE-A- 4 329 292
- US-A- 4 966 944
- US-A- 5 258 464
- Exxon Mobil Chemical Technical Information "EXAXT TM 4033", Plastomer for Polymer Modification, 1999.
- Taschenbuch der Kunststoff-Additive, 2. Ausgabe, 1983, S. 696-699. Carl Hanser Verlag München.

## Beschreibung

Die vorliegende Erfindung betrifft Propylenpolymerisate.

Weiterhin betrifft die vorliegende Erfindung ein Verfahren zur Herstellung dieser Polymerisate sowie deren Verwendung als Folien, Fasern und Formkörper.

Die Herstellung von Propylenhomopolymerisaten durch Ziegler-Natta-Polymerisation ist bereits seit langem bekannt. Die dabei verwendeten Katalysatorkomponenten enthalten u.a. Verbindungen des mehrwertigen Titans, Aluminiumhalogenide und/oder Alkyle, sowie Elektronendonorverbindungen, wobei meistens Silane, Ester, Ketone oder Lactone verwendet werden (DE-A 42 16 548, DE-A 44 19 438, EP-A 171 200, EP-A 530 599, US-A 4 857 613).

Nach diesem Verfahren können Propylenhomopolymerisate mit sehr unterschiedlichen Eigenschaften erhalten werden, beispielsweise mit einer deutlich unterschiedlichen Steifigkeit, Schlagzähigkeit oder Fließfähigkeit. Einige Anwendungsbereiche, in denen vorzugsweise Propylenpolymerisate verwendet werden, benötigen insbesondere solche Propylenpolymerisate, die neben einer hohen Schlagzähigkeit aus optischen Gründen auch eine deutlich verringerte Tendenz zur Weißbruchbildung und eine hohe Steifigkeit aufweisen.

Neben der Herstellung von Propylenpolymerisaten durch Ziegler-Natta-Katalysatoren gibt es seit einigen Jahren auch die Möglichkeit, Polymerisate des Propylens und des Ethylens unter Verwendung von Metallocenkatalysatoren mit cyclischen Liganden herzustellen (EP-A 519 237, EP-A 692 499).

In der DE-A 4407327 werden Propylenpolymerisate beschrieben, die aus einem Propylenhomopolymerisat und einem Nukleierungsmittel bestehen und sich u.a. durch eine hohe Steifigkeit und Fließfähigkeit auszeichnen. Für bestimmte Anwendungsbereiche von Propylenpolymerisaten ist man aber an einer nochmals erhöhten Steifigkeit sowie an einem verbesserten Weißbruchverhalten interessiert.

Aus der EP-A 593 221 sind Mischungen aus Propylenpolymerisaten und Ethylen-Copolymerisaten mit einpolymerisierten C₄-C₁₈-Alk-1-enen bekannt, deren Dichte kleiner oder gleich 0,913 g/cm³ ist. Die darin aufgeführten Mischungen weisen gute Werte hinsichtlich ihrer Schlagzähigkeit und ihrer Steifigkeit auf, wobei aber nicht aufgeführt wird, wie das Weißbruchverhalten derartiger Produkte verbessert werden kann.

Weiterhin werden in der WO-A 94/06859 Mischungen aus thermoplastischen Polymerisaten und linearen Ethylen-Copolymerisaten mit einpolymerisierten C₃-C₂₀-Alk-1-enen beansprucht, die u.a. eine hohe Transparenz und eine gute Schlagzähigkeit bei tiefen Temperaturen aufweisen. Der WO-A 94/06859 läßt sich aber nicht entnehmen, wie man das Weißbruchverhalten derartiger Mischungen verbessern und zugleich deren Steifigkeit erhöhen kann.

Gegenstand der WO-A 96/06132 sind Mischungen aus Propylenhomopolymerisaten und Copolymerisaten des Ethylens mit C₃-C₈-Alk-1-enen, die noch 0,1 bis 5 Gew.-%, bezogen auf die Mischung, anorganische Füllstoffe enthalten können. Derartige Mischungen zeichnen sich u.a. durch eine gute Schlagzähigkeit und Oberflächenhärte aus. Ähnliche Mischungen aus Polypropylen, Copolymerisaten des Ethylens mit But-1-en und mindestens 5 Gew.-%, bezogen auf die Mischung, Talk sind der Lehre der EP-A 605 180 zu entnehmen. Sowohl aus der WO-A 96/06132, als auch aus der EP-A 605 180 läßt sich aber nicht erschließen, auf welche Weise das Weißbruchverhalten derartiger Mischungen verbessert werden kann.

Der vorliegenden Erfindung lag daher die Aufgabe zugrunde, den geschilderten Nachteilen abzuhelfen und ein Propylenpolymerisat zu entwickeln, welches sich durch ein günstiges Eigenschaftsprofil hinsichtlich einer guten Schlagzähigkeit, Fließfähigkeit und Verarbeitbarkeit auszeichnet und darüber hinaus über eine hohe Steifigkeit verfügt und eine möglichst geringe Tendenz zum Weißbruch aufweist.

Demgemäß wurden Propylenpolymerisate entwickelt, enthaltend
a) 50 bis 95 Gew.-Teile eines Propylenhomopolymerisats mit einem Schmelzflußindex von 0,1 bis 100 g/10 min., bei einer Temperatur von 230°C und unter einem Gewicht von 2,16 kg, nach ISO-Norm 1133 und einem Isotaktizitätsindex, in Xylol nach ISO-Norm 6427b, von 98,0 bis 99,5 %,
b) 5 bis 50 Gew.-Teile eines Ethylen-Copolymerisats mit 4 bis 40 Gew.-% einpolymerisiertem C₄-C₂₀-Alk-1-en, einer Dichte von 0,865 bis 0,920 g/cm³ und einem Schmelzflußindex von 0,1 bis 100 g/10 min, bei 230°C und unter einem Gewicht von 2,16 kg, nach ISO-Norm 1133 und
c) 0 bis 1,5 Gew.-Teile eines Nukleierungsmittels, wobei die Summe der Gew.-Teile des Propylenhomopolymerisats a) und des Ethylencopolymerisats b) stets 100 Gew.-Teile ergibt.

Bevorzugt sind dabei insbesondere solche Propylenpolymerisate, die
a) 60 bis 90, insbesondere 75 bis 90 Gew.-Teile des Propylenhomopolymerisats a),
b) 10 bis 40, insbesondere 10 bis 25 Gew.-Teile des Ethylen-Copolymerisats b) und
c) 0 bis 1,5, insbesondere 0,05 bis 1,5 Gew.-Teile des Nukleierungsmittels c) aufweisen.

Die Summe der Gew.-Teile des Propylenhomopolymerisats und des Ethylencopolymerisats b) ergibt dabei stets 100 Gew.-Teile.

Bevorzugt wird dabei ein solches Propylenhomopolymerisat a) eingesetzt, welches einen Schmelzflußindex von 0,2 bis 50 g/10 min, bei einer Temperatur von 230°C und unter einem Gewicht von 2,16 kg, nach ISO-Norm 1133, aufweist. Der Schmelzflußindex entspricht dabei der Menge an Polymerisat in Gramm, die aus der nach ISO-Norm 1133 genormten Prüfvorrichtung bei einer Temperatur von 230°C und unter einem Gewicht von 2,16 kg ausgepreßt wird.

Das erfindungsgemäße Propylenpolymerisat enthält insbesondere ein solches Propylenhomopolymerisat a), dessen Isotaktizitätsindex bei 98,0 % bis 99,5 % liegt. Unter dem Isotaktizitätsindex soll dabei der Anteil an Polymerisat verstanden werden, der nach ISO-Norm 6427 b) in Xylol unlöslich ist. Der Isotaktizitätsindex ist eine Maßzahl für die Stereospezifität des Propylenhomopolymerisats.

Das zu diesen Propylenhomopolymerisaten a) führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Als feinteiliger Träger für die titanhaltige Feststoffkomponente kann insbesondere auch ein feinteiliges anorganisches Oxid verwendet werden, das einen pH-Wert von 1 bis 6, einen mittleren Teilchendurchmesser von 5 bis 200 µm, insbesondere von 20 bis 70 µm und einen mittleren Teilchendurchmesser der Primärpartikel von 1 bis 20 µm, insbesondere von 1 bis 5 µm aufweist. Bei den sogenannten Primärpartikeln handelt es sich dabei um poröse, granuläre Oxidpartikel, welche durch Mahlung, gegebenenfalls nach vorgenommener Siebung, aus einem entsprechenden Hydrogel erhalten werden. Das Hydrogel wird dabei im sauren Bereich, d.h. in einem Bereich mit einem pH-Wert zwischen 1 und 6 erzeugt, oder aber mit entsprechend sauren Waschlösungen nachbehandelt und gereinigt.

Weiterhin ist das feinteilige anorganische Oxid u.a. auch noch dadurch charakterisiert, daß es Hohlräume bzw. Kanäle mit einem mittleren Durchmesser von 0,1 bis 20 µm, insbesondere von 1 bis 15 µm aufweist, deren makroskopischer Volumenanteil am Gesamtpartikel im Bereich von 5 bis 30 %, insbesondere im Bereich von 10 bis 30 % liegt. Das feinteilige anorganische Oxid weist ferner insbesondere ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf. Der pH-Wert, d.h. der negative dekadische Logarithmus der Protonenkonzentration des anorganischen Oxids liegt im Bereich von 1 bis 6, insbesondere im Bereich von 2 bis 5.

Bevorzugte anorganische Oxide sind insbesondere Oxide des Siliciums, des Aluminiums, des Titans oder eines der Metalle der I. bzw. der II. Hauptgruppe des Periodensystems. Als ganz bevorzugtes Oxid wird neben Aluminiumoxid oder Magnesiumoxid oder einem Schichtsilikat auch Kieselgel (SiO₂) verwendet, wobei dieses insbesondere durch Sprühtrocknung erhalten werden kann. Es können auch sogenannte Cogele, d.h. Gemische von zwei verschiedenen anorganischen Oxiden, eingesetzt werden. Derartige feinteilige anorganische Oxide sind aber auch im Handel erhältlich.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl) -Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 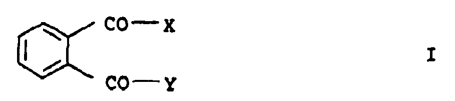 verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 171 200, der GB-A 2 111 066, der US-A 4 857 613 und der US-A 5 288 824 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder SiO₂·aAl₂O₃ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel II

R'ₙSi(OR")₄₋ₙ II

wobei R' gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Arylalkylgruppe bedeutet, R" gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R' eine C₁- bis C₈-Alkylgruppe oder eine 5- bis 7-gliedrige Cycloalkylgruppe, R" eine C₁- bis C₄-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan, Dimethoxysek-butylisopropylsilan, Diethoxydicyclopentylsilan, Diethoxysek.butylisopropylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 20:1 beträgt. Die Katalysatorbestandteile können in beliebiger Reihenfolge einzeln oder als Gemisch der Komponenten in das Polymerisationssystem eingebracht werden.

Die Polymerisation zur Herstellung der Propylenhomopolymerisate a) wird üblicherweise bei einem Druck von 20 bis 40 bar, einer Temperatur von 60 bis 90°C und einer mittleren Verweilzeit des Reaktionsgemisches von 0,5 bis 5 Stunden durchgeführt. Bevorzugt sind dabei Drücke von 25 bis 35 bar, Temperaturen von 65 bis 85°C und mittlere Verweilzeiten von 1,0 bis 4 Stunden. Man wählt die Polymerisationsbedingungen üblicherweise so, daß pro mmol der Aluminiumkomponente 0,05 bis 2 kg, bevorzugt 0,1 bis 1,5 kg des Propylenhomopolymerisats a) gebildet werden.

Das Molekulargewicht der dabei erhältlichen Polymerisate kann wie üblich durch Zugabe von Reglern, insbesondere von Wasserstoff kontrolliert werden. Als Regler können auch C₂- bis C₆-Alk-1-ene, beispielsweise Ethylen oder But-1-en eingesetzt werden. In diesem Fall kann das Propylenhomopolymerisat a) noch bis zu 0,1 Gew.-% anderer C₂- bis C₆-Alk-1-ene enthalten.

Als Ethylen-Copolymerisat b) wird insbesondere ein solches Copolymerisat eingesetzt, welches 4 bis 40 Gew.-%, vorzugsweise 7 bis 30 Gew.-% einpolymerisierte C₄-C₂₀-Alk-1-ene aufweist. Bevorzugte Comonomere sind bei dem Ethylen-Copolymerisat b) C₄-C₁₂-Alk-1-ene, wobei vorzugsweise But-1-en, Pent-1-en, 4-Methyl-pent-1-en, Hex-1-en, Hept-1-en oder Oct-1-en sowie Gemische aus diesen C₄-C₁₂-Comonomeren verwendet werden. Besonders gut geeignete Comonomere sind But-1-en, Hex-1-en oder Oxt.1-en.

Die in den erfindungsgemäßen Ethylen-Copolymerisaten b) vorliegenden Ethylen-Copolymerisate b) weisen eine Dichte von 0,865 bis 0,920 g/cm³, insbesondere von 0,868 bis 0,910 g/cm³ auf. Ihr Schmelzflußindex, bei 230°C und unter einem Gewicht von 2,16 kg, nach ISO-Norm 1133, liegt bei 0,1 bis 100 g/10 min., insbesondere bei 1 bis 30 g/10 min.

Die Herstellung der in den erfindungsgemäßen Propylenpolymerisaten enthaltenden Ethylen-Copolymerisaten b) erfolgt üblicherweise durch entsprechende Polymerisation mit metallhaltigen Katalysatoren, beispielsweise mit Katalysatoren auf der Basis eines Metallocenkomplexes oder mit Hilfe von titan- und aluminiumhaltigen Ziegler-Katalysatoren, oder durch Phillips-Katalysatoren auf der Basis von chromhaltigen Verbindungen. Die Polymerisationsreaktion kann dabei mit den in der Technik üblichen Reaktoren, sowohl in der Gasphase, in Lösung, in flüssigen Monomeren oder auch in einer Aufschlämmung durchgeführt werden. Dabei kann kontinuierlich, halbkontinuierlich oder diskontinuierlich polymerisiert werden.

Vorzugsweise werden die Ethylen-Copolymerisate b) durch Polymerisation von Ethylen und den entsprechenden C₄-C₂₀-Alk-1-enen mit Hilfe von Katalysatorsystemen hergestellt, die
A) gegebenenfalls einen anorganischen Träger,
B) mindestens einen Metallocenkomplex,
C) mindestens eine metalloceniumionenbildende Verbindung und
D) gegebenenfalls mindestens eine organische Metallverbindung eines Alkali- oder Erdalkalimetalls oder eines Metalls der III. Hauptgruppe des Periodensystems enthalten.

Die Polymerisation mit Hilfe derartiger metallocenhaltiger Katalysatorsysteme, die zu den Ethylen-Copolymerisaten b) führt, wird insbesondere bei Temperaturen im Bereich von -50 bis 300°C, vorzugsweise im Bereich von 0 bis 150°C, und bei Drücken im Bereich von 0,5 bis 3000 bar, vorzugsweise im Bereich von 1 bis 80 bar, durchgeführt. Bei diesem Verfahren sollen die Verweilzeiten der jeweiligen Reaktionsgemische auf 0,5 bis 5 Stunden, insbesondere auf 0,7 bis 3,5 Stunden, eingestellt werden. Es können bei der Polymerisation u.a. auch Antistatika sowie Molmassenregler, beispielsweise Wasserstoff, mitverwendet werden.

Die Polymerisation kann in Lösung, in Suspension, in flüssigen Monomeren oder in der Gasphase durchgeführt werden. Bevorzugt erfolgt die Polymerisation in Suspension oder in der Gasphase.

Das Polymerisationsverfahren zur Herstellung der Copolymerisate b) kann sowohl kontinuierlich als auch diskontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann (Reaktorkaskade).

Derartige metallocenhaltige Katalysatorsysteme enthalten gegebenenfalls als Komponente A) einen anorganischen Träger. Als anorganische Träger wird dabei insbesondere ein anorganisches Oxid verwendet, welches einen pH-Wert, ermittelt nach S.R. Morrison, "The Chemical Physics of Surfaces", Plenum Press, New York [1977], Seite 130ff, von 1 bis 6 und Hohlräume und Kanäle aufweist, deren makroskopischer Volumenanteil am Gesamtpartikel im Bereich von 5 bis 30 % liegt. Bevorzugt werden dabei insbesondere solche anorganischen Oxide eingesetzt, deren pH-Wert, d.h. deren negativer dekadischer Logarithmus der Protonenkonzentration, im Bereich von 2 bis 5,5 und insbesondere im Bereich von 2 bis 5 zu finden ist. Weiterhin werden als anorganische Träger insbesondere solche anorganischen Oxide verwendet, die Hohlräume und Kanäle aufweisen, deren makroskopischer Volumenanteil am Gesamtpartikel 8 bis 30 %, bevorzugt 10 bis 30 % und besonders bevorzugt 15 bis 25 %, beträgt.

Weitere vorzugsweise eingesetzte anorganische Träger sind auch solche anorganischen Oxide, die einem mittleren Teilchendurchmesser von 5 bis 200 µm, insbesondere von 20 bis 90 µm, und einen mittleren Teilchendurchmesser der Primärpartikel von 1 bis 20 µm, insbesondere von 1 bis 5 µm, aufweisen. Bei den sogenannten Primärpartikeln handelt es sich dabei um poröse, granuläre Partikel. Die Primärpartikel weisen Poren mit einem Durchmesser von insbesondere 1 bis 1000 ·10⁻¹⁰ m (Å) auf. Weiterhin sind solche anorganischen Oxide auch noch dadurch charakterisiert, daß sie über Hohlräume und Kanäle mit einem mittleren Durchmesser von 0,1 bis 20 µm, insbesondere von 1 bis 15 µm, verfügen. Die anorganischen Oxide weisen ferner insbesondere noch ein Porenvolumen von 0,1 bis 10 cm³/g, bevorzugt von 1,0 bis 5,0 cm³/g, und eine spezifische Oberfläche von 10 bis 1000 m²/g, bevorzugt von 100 bis 500 m²/g, auf.

Aufgrund der in den feinteiligen anorganischen Oxiden vorhandenen Hohlräume und Kanäle liegt im Trägermaterial eine deutlich verbesserte Verteilung der Katalysatoraktivkomponenten vor. Die sauren Zentren auf der Oberfläche des anorganischen Oxids bewirken zusätzlich eine homogene Beladung mit den Katalysatorbestandteilen. Darüber hinaus wirkt sich ein derart mit Hohlräumen und Kanälen durchzogenes Material positiv auf die diffusionskontrollierte Versorgung mit Monomeren und Cokatalysatoren und damit auch auf die Polymerisationskinetik aus.

Ein solches feinteiliges anorganisches Oxid ist u.a. erhältlich durch Sprühtrocknen von vermahlenen, entsprechend gesiebten Hydrogelen, welche hierzu mit Wasser oder einem aliphatischen Alkohol vermaischt werden. Während der Sprühtrocknung kann der benötigte pH-Wert von 1 bis 6 auch durch die Verwendung entsprechend saurer Primärpartikelsuspensionen eingestellt werden. Ein solches feinteiliges anorganisches Oxid ist aber auch im Handel erhältlich.

Bevorzugte anorganische Träger sind insbesondere Oxide des Siliciums, des Aluminiums, des Titans oder eines der Metalle der I. bzw. der II. Hauptgruppe des Periodensystems. Als ganz bevorzugtes anorganisches Oxid wird neben Aluminiumoxid oder Magnesiumoxid oder einem Schichtsilikat auch Kieselgel (SiO₂) verwendet, wobei dieses insbesondere durch Sprühtrocknung erhalten werden kann.

Als Komponente A) können auch sogenannte Cogele, d.h. Gemische von mindestens zwei verschiedenen anorganischen Oxiden, eingesetzt werden.

Es werden vorzugsweise pro Gramm Träger, d.h. der Komponente A₎, 0,1 bis 10000 µmol, insbesondere 5 bis 200 µmol des Metallocenkomplexes, d.h. der Komponente B) eingesetzt.

Als Komponente B) enthält das vorzugsweise eingesetzte metallocenhaltige Katalysatorsystem mindestens einen oder mehrere Metallocenkomplexe. Als Metallocenkomplexe eigenen sich besonders solche der allgemeinen Formel IV 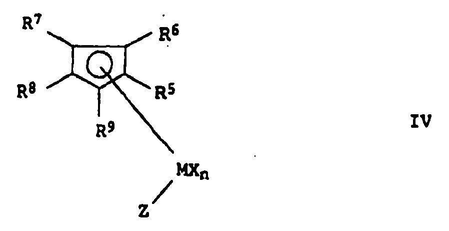 in der die Substituenten folgende Bedeutung haben:
- M: Titan, Zirkonium, Hafnium, Vanadium, Niob oder Tantal, sowie Elemente der III. Nebengruppe des Periodensystems und der Lanthanoiden,
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
- n: eine ganze Zahl zwischen 1 und 3, wobei n der Wertigkeit von M minus der Zahl 2 entspricht,
wobei
- R¹⁰ und R¹¹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R⁵ bis R⁹: Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R¹²)₃ mit
- R¹²: C₁- bis C₁₀-Alkyl, C₃- bis C₁₀-Cycloalkyl oder C₆- bis C₁₅-Aryl,
- Z: für X oder 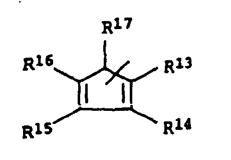 steht,
wobei die Reste
- R¹³ bis R¹⁷: Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁸)₃ mit
- R¹⁸: C₁- bis C₁₀-Alkyl, C₆- bis C₁₅-Aryl oder C₃- bis C₁₀-Cycloalkyl,
oder wobei die Reste R⁸ und Z gemeinsam eine Gruppierung -R¹⁹-A- bilden, in der R¹⁹ 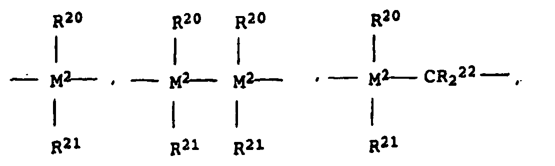 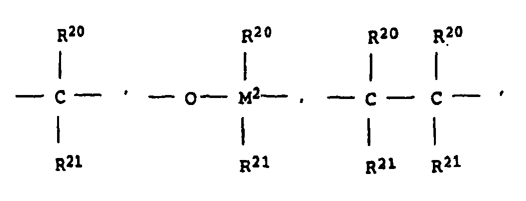 = BR²⁰, = AlR²⁰, -Ge-, -Sn-, -O-, -S-, = SO, = SO₂, = NR²⁰, = CO, = PR²⁰ oder = P(O)R²⁰ ist,
wobei
- R²⁰, R²¹ und R²²: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A: ―O―, ―S―, 〉NR²³ oder 〉PR²³ bedeuten, mit
- R²³: C₁- bis C₁₀-Alkyl, C₆- bis C₁₅-Aryl, C₃- bis C₁₀-Cycloalkyl, Alkylaryl oder Si(R²⁴)₃,
- R²⁴: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁸ und R¹⁶ gemeinsam eine Gruppierung -R¹⁹- bilden.

Von den Metallocenkomplexen der allgemeinen Formel IV sind 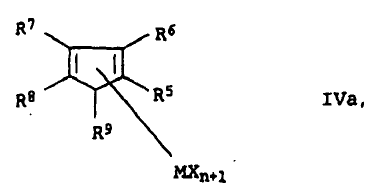 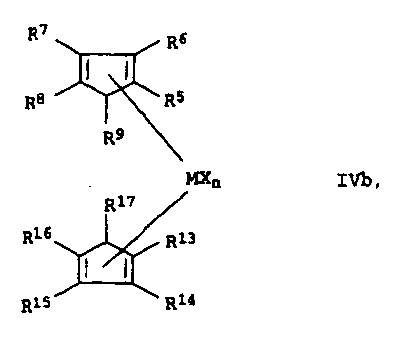 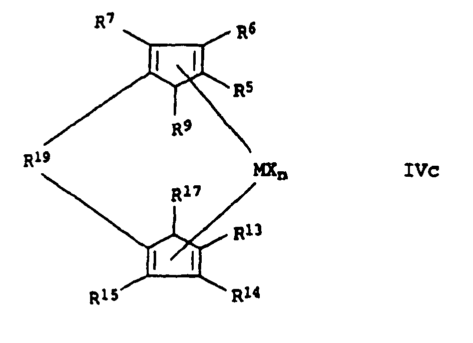 und 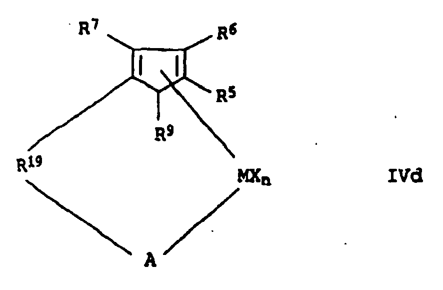 bevorzugt.

Die Reste X können gleich oder verschieden sein, bevorzugt sind sie gleich.

Von den Verbindungen der Formel IVa sind insbesondere diejenigen bevorzugt, in denen
- M: Titan, Zirkonium oder Hafnium,
- X: Chlor, C₁-bis C₄-Alkyl oder Phenyl,
- n: die Zahl 2 und
- R⁵ bis R⁹: Wasserstoff oder C₁- bis C₄-Alkyl bedeuten.

Von den Verbindungen der Formel IVb sind als bevorzugt diejenigen zu nennen, bei denen
- M: für Titan, Zirkonium oder Hafnium steht,
- X: Chlor, C₁-bis C₄-Alkyl oder Phenyl,
- n: die Zahl 2,
- R⁵ bis R⁹: Wasserstoff, C₁- bis C₄-Alkyl oder Si(R¹²)₃,
- R¹³ bis R¹⁷: Wasserstoff, C₁- bis C₄-Alkyl oder Si(R¹⁸)₃ bedeuten.

Insbesondere sind die Verbindungen der Formel IVb geeignet, in denen die Cyclopentadienylreste gleich sind.

Beispiele für besonders geeignete Verbindungen sind u.a.: Bis(cyclopentadienyl)zirkoniumdichlorid, Bis(pentamethylcyclopentadienyl)-zirkoniumdichlorid, Bis(methylcyclopentadienyl)-zirkoniumdichlorid, Bis(ethylcyclopentadienyl)-zirkoniumdichlorid, Bis(n-butylcyclopentadienyl)-zirkoniumdichlorid und Bis(trimethylsilylcyclopentadienyl)-zirkoniumdichlorid sowie die entsprechenden Dimethylzirkoniumverbindungen.

Von den Verbindungen der Formel IVc sind diejenigen besonders geeignet, in denen
- R⁵ und R¹³: gleich sind und für Wasserstoff oder C₁- bis C₁₀-Alkylgruppen stehen,
- R⁹ und R¹⁷: gleich sind und für Wasserstoff, eine Methyl-, Ethyl-, iso-Propyl- oder tert.-Butylgruppe stehen,
- R⁶, R⁷, R¹⁴ und R¹⁵: die Bedeutung R⁷ und R¹⁵ C₁- bis C₄-Alkyl R⁶ und R¹⁴ Wasserstoff haben oder zwei benachbarte Reste R⁶ und R⁷ sowie R¹⁴ und R¹⁵ gemeinsam für 4 bis 12 C-Atome aufweisende cyclische Gruppen stehen,
- R¹⁹: für 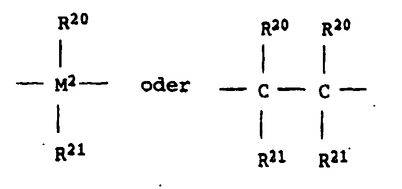 steht,
- M: für Titan, Zirkonium oder Hafnium und
- X: für Chlor, C₁- bis C₄-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-ethylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Diphenylsilandiylbis(-2-methylindenyl)-hafniumdichlorid
sowie die entsprechenden Dimethylzirkoniumverbindungen.

Weitere Beispiele für geeignete Komplexverbindungen sind u.a.
Dimethylsilandiylbis(-2-methyl-4-phenylindenyl)zirkoniumdichlorid,
Dimethylsilandiylbis(-2-methyl-4-naphthylindenyl)zirkoniumdichlorid,
Dimethylsilandiylbis(-2-methyl-4-isopropylindenyl)zirkoniumdichlorid und
Dimethylsilandiylbis(-2-methyl-4,6-diisopropylindenyl)zirkoniumdichlorid sowie die entsprechenden Dimethylzirkoniumverbindungen.

Bei den Verbindungen der allgemeinen Formel IVd sind als besonders geeignet diejenigen zu nennen, in denen
- M: für Titan oder Zirkonium,
- X: für Chlor, C₁-bis C₄-Alkyl oder Phenyl stehen.
- R¹⁹: für 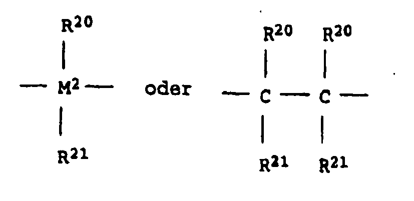 steht,
- A: für ―O― , ―S―, 〉NR²³
und
- R⁵ bis R⁷ und R⁹: für Wasserstoff, C₁- bis C₁₀-Alkyl, C₃- bis C₁₀-Cycloalkyl, C₆- bis C₁₅-Aryl oder Si(R¹²)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Komponente C) enthält das vorzugsweise zur Herstellung der Ethylen-Copolymerisate b) eingesetzte metallocenhaltige Katalysatorsystem eine metalloceniumionenbildende Verbindung.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel V

M³X¹X²X³ V

bevorzugt, in der
- M³: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel V, in der X¹, X² und X³ gleich sind, vorzugsweise Tris(pentafluorphenyl)boran.

Als ionische Verbindungen mit lewissauren Kationen sind Verbindungen der allgemeinen Formel VI

[(Y^{a+})Q₁Q₂...Q_{z}]^{d+} VI

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex IV.

Besonders geeignet als metalloceniumionenbildende Verbindung C) sind offenkettige oder cyclische Alumoxanverbindungen der allgemeinen Formel II oder III 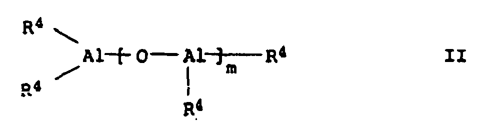 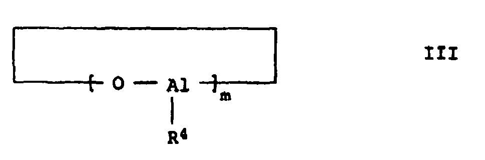 wobei
- R⁴: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Vorzugsweise werden sowohl die Metallocenkomplexe (Komponente B) als auch die metalloceniumionenbildende Verbindungen (Komponente C) in Lösung eingesetzt, wobei aromatische Kohlenwasserstoffe mit 6 bis 20 C-Atomen, insbesondere Xylole und Toluol, besonders bevorzugt sind.

Weiterhin können als Komponente C) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Das vorzugsweise zur Herstellung der Ethylen-Copolymerisate b) eingesetzte metallocenhaltige Katalysatorsystem kann als Komponente D₎ gegebenenfalls noch eine Metallverbindung der allgemeinen Formel I

M¹ (R¹)ᵣ (R²)ₛ (R³)ₜ I

in der
- M¹: ein Alkali-, ein Erdalkalimetall oder ein Metall der III. Hauptgruppe des Periodensystems, d.h. Bor, Aluminium, Gallium, Indium oder Thallium bedeutet,
- R¹: Wasserstoff, C₁- bis C₁₀-Alkyl, C₆- bis C₁₅-Aryl, Alkylaryl oder Arylalkyl mit jeweils 1 bis 10 C-Atom im Alkylrest und 6 bis 20 C-Atomen im Arylrest,
- R² und R³: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M¹ entspricht,
enthalten.

Von den Metallverbindungen der allgemeinen Formel I sind diejenigen bevorzugt, in denen
- M¹: Lithium, Magnesium oder Aluminium bedeutet und
- R¹ bis R³: für C₁- bis C₁₀-Alkyl stehen.

Besonders bevorzugte Metallverbindungen der Formel I sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Komponente D) eingesetzt wird, ist sie bevorzugt in einer Menge von 800:1 bis 1:1, insbesondere 500:1 bis 50:1 (molares Verhältnis von M¹ aus I zu Übergangsmetall M aus IV) im Katalysatorsystem enthalten.

Die Komponenten B) und C) sowie gegebenenfalls A) und D) werden zusammen als metallocenhaltiges Katalysatorsystem zur Herstellung der erfindungsgemäß einzusetzenden Ethylen-Copolymerisate b) verwendet.

Neben dem Propylenhomopolymerisat a) und dem Ethylen-Copolymerisat b) enthalten die erfindungsgemäßen Propylenpolymerisate noch gegebenenfalls ein Nukleierungsmittel c), welches definitionsgemäß die Keimbildung bei der Kristallisation aus der Schmelze beschleunigt. Als Nukleierungsmittel werden dabei die in der Kunststofftechnik üblicherweise eingesetzten Nukleierungsmittel verwendet, beispielsweise mineralische Zusatzstoffe wie Talkum, Kieselsäure oder Kaolin, oder organische Verbindungen wie Mono- und Polycarbonsäuren sowie deren Salze, oder Polymerisate wie Ethylen-Acrylester-Copolymerisate.

Als gegebenenfalls in den erfindungsgemäßen Propylenpolymerisaten vorliegendes Nukleierungsmittel c) können dabei u.a. Dibenzylidensorbitol und dessen C₁-C₈-alkylsubstituierte Derivate, beispielsweise Methyldibenzylidensorbitol oder Dimethyldibenzylidensorbitol verwendet werden, ferner Salze von Diestern der Phosphorsäure, beispielsweise Natrium-2,2'-methylenbis(4,6-di-tert.-butylphenyl)phosphat.

Als besonders bevorzugtes Nukleierungsmittel c) wird feinteiliges Talkum im erfindungsgemäßen Propylenpolymerisat eingesetzt. Das feinteilige Talkum sollte vorzugsweise eine mittlere Teilchengröße von weniger als 5 µm, insbesondere von weniger als 3 µm, aufweisen.

Die vorstehend beschriebenen Nukleierungsmittel c) sind übliche im Handel erhältliche Additive. Neben den Nukleierungsmitteln c) können im erfindungsgemäßen Propylenpolymerisat noch übliche Stabilisatoren wie beispielsweise Calciumstearat und phenolische Antioxidantien, Wärmestabilisatoren, UV-Stabilisatoren und Verarbeitungshilfsmittel zugegeben werden.

Sofern in den erfindungsgemäßen Propylenpolymerisaten Nukleierungsmittel c) vorliegen, werden das Propylenhomopolymerisat a), das Ethylen-Copolymerisat b) und das Nukleierungsmittel c) üblicherweise in solchen Mengenverhältnissen verwendet, daß pro 100 Gew.-Teile des Propylencopolymerisats a) und des Ethylen-Copolymerisats b) 0,05 bis 1,5 Gew.-Teile, insbesondere 0,05 bis 1,0 Gew.-Teile und besonders bevorzugt 0,1 bis 0,5 Gew.-Teile des Nukleierungsmittels b), eingesetzt werden.

Die Herstellung der erfindungsgemäßen Propylenpolymerisate erfolgt durch Zumischen des gegebenenfalls verwendeten Nukleierungsmittels c) und des Ethylen-Copolymerisats b) zum Propylenhomopolymerisat a) in den in der Kunststoffverarbeitung üblicherweise zum Mischen von Stoffen eingesetzten Apparaturen beispielsweise in Trommelmischern, in Mühlen, in Extrudern, insbesondere in Schnecken- oder Scheibenextrudern, in Walzwerken oder Knetern. Das Propylenhomopolymerisat a), das Ethylen-Copolymerisat b) und gegebenenfalls das Nukleierungsmittel c) werden in der Mischapparatur üblicherweise bei einer Temperatur von 200 bis 250°C, insbesondere von 210 bis 240°C, miteinander vermischt. Der Mischungsvorgang erfolgt dabei in der Regel bei Drücken von 1 bis 100 bar und mittleren Verweilzeiten von 0,5 bis 60 Minuten. Die genauen Werte für den Druck und die mittlere Verweilzeit sind von den jeweils eingesetzten Mischapparaturen abhängig.

Weiterhin kann das Nukleierungsmittel c) auch auf das Propylenhomopolymerisat a) und auf das Ethylen-Copolymerisat b) aufgesprüht werden.

Die erfindungsgemäßen Propylenpolymerisate zeichnen sich u.a. durch eine sehr hohe Steifigkeit und Fließfähigkeit bei gleichzeitig noch guter Schlagzähigkeit aus. Sie sind darüber hinaus gut verarbeitbar und weisen nur eine sehr geringe Tendenz zum Weißbruch auf. Aufgrund der nur geringen Neigung zum Weißbruch eignen sich die erfindungsgemäßen Propylenpolymerisate insbesondere auch für Gebrauchsartikel, bei denen das Aussehen eine Rolle spielt. Sie können auch allgemein als Folien, Fasern und Formkörper verwendet werden.

### Beispiele

### Beispiele 1 bis 9 und Vergleichsbeispiele A bis F

Es wurden folgende Polymerisate eingesetzt:
a₁₎ Propylenhomopolymerisat mit einem Schmelzflußindex (MFR) von 12,8 g/10 min., bei 230°C und unter einem Gewicht von 2,16 kg, nach ISO-Norm 1133 und einem Isotaktizitätsindex, in Xylol nach ISO-Norm 6427b) von 98,6 %.
a₂₎ Propylenhomopolymerisat mit einem Schmelzflußindex (MFR) von 10,7 g/10 min., bei 230°C und unter einem Gewicht von 2,16 kg, nach ISO-Norm 1133 und einem Isotaktizitätsindex, in Xylol nach ISO-Norm 6427b) von 96,7 %.
b₁₎ Ethylen-Copolymerisat mit 10 % einpolymerisiertem But-1-en, einer Dichte von 0,903 g/cm³ und einem Schmelzflußindex (MFR) von 3,9 g/10 min., bei 230°C und unter einem Gewicht von 2,16 kg, nach ISO-Norm 1133, hergestellt mit Hilfe eines metallocenhaltigen Katalysators auf der Basis eines Komplexes der allgemeinen Formel IV b.
b₂₎ Ethylen-Copolymerisat mit 17 % einpolymerisiertem But-1-en, einer Dichte von 0,891 g/cm³ und einem Schmelzflußindex (MFR) von 3,7 g (10 min., bei 230°C und unter einem Gewicht von 2,16 kg, nach ISO-Norm 1133, hergestellt und mit Hilfe eines metallocenhaltigen Katalysators auf der Basis eines Komplexes der allgemeinen Formel IV b.
b₃₎ Ethylen-Copolymerisat mit 19 % einpolymerisiertem But-1-en, einer Dichte von 0,878 g/cm³ und einem Schmelzflußindex (MFR) von 6,7 g/10 min., bei 230°C und unter einem Gewicht von 2,16 kg, nach ISO-Norm 1133, hergestellt mit Hilfe eines metallocenhaltigen Katalysators auf der Basis eines Komplexes der allgemeinen Formel IV b.
b₄₎ Ethylen-Copolymerisat mit 24 % einpolymerisiertem Oct-1-en, einer Dichte von 0,870 g/cm³ und einem Schmelzflußindex (MFR) von 2,3 g/10 min., bei 230°C und unter einem Gewicht von 2,16 kg, nach ISO-Norm 1133, hergestellt mit Hilfe eines metallocenhaltigen Katalysators auf der Basis eines Komplexes der allgemeinen Formel IV b.
b₅₎ Ethylen-Copolymerisat mit 25 % einpolymerisiertem Oct-1-en, einer Dichte von 0,868 g/cm³ und einem Schmelzflußindex (MFR) von 1,0 g/10 min., bei 230°C und unter einem Gewicht von 2,16 kg, nach ISO-Norm 1133, hergestellt mit Hilfe eines metallocenhaltigen Katalysators auf der Basis eines Komplexes der allgemeinen Formel IV b.
b₆₎ Ethylen-Copolymerisat mit 24 % einpolymerisiertem Oct-1-en, einer Dichte von 0,870 g/cm³ und einem Schmelzflußindex (MFR) von 9,0 g/10 min., bei 230°C und unter einem Gewicht von 2,16 kg, nach ISO-Norm 1133, hergestellt mit Hilfe eines metallocenhaltigen Katalysators auf der Basis eines Komplexes der allgemeinen Formel IV b.
b₇₎ Ethylen-Propylen-Copolymerisat mit 30 % einpolymerisiertem Propylen, einer Dichte von 0,890 g/cm³ und einem Schmelzflußindex (MFR) von 0,3 g/10 min., bei 230°C und unter einem Gewicht von 2,16 kg, nach ISO-Norm 1133, hergestellt mit Hilfe eines Ziegler-Natta-Katalysators.

Die Mischung der Polymere erfolgte auf einem Zweischneckenextruder ZSK 30 der Firma Werner & Pfleiderer mit einem Länge/Durchmesser-Verhältnis von 33. Die verwendeten Polymere der Beispiele 1 - 9 und der Vergleichsbeispiele A - D wurden als Granulat zusammen mit 0,35 Gew.-Teilen eines feinteiligen Talkums dem Extruder zugeführt und in diesem bei etwa 230°C vermischt.

In den Vergleichsbeispielen E und F wurden sogenannte Blockcopolymerisate des Propylens eingesetzt, die in einem zweistufigen Verfahren hergestellt worden sind. Dabei wurde analog dem in der EP-A 515 855 beschriebenen Verfahren in einer ersten Stufe ein Propylenhomopolymerisat produziert, welchem in einer zweiten Stufe ein Gemisch aus Propylen und Ethylen hinzupolymerisiert wurde.

Es wurden folgende, jeweils mit 0,35 Gew.-Teilen eines feinteiligen Talkums, bezogen auf 100 Gew.-Teile des Propylenpolymerisats V₁ oder V₂, ausgerüstete Produkte eingesetzt:
V₁) Propylen-Ethylen-Copolymerisat bestehend aus 90 Gew.-Teilen eines Propylenhomopolymerisats und 10 Gew.-Teilen eines Ethylen-Propylen-Copolymerisats mit 55 Gew.-% einpolymerisiertem Ethylen.
V₂) Propylen-Ethylen-Copolymerisat bestehend aus 86 Gew.-Teilen eines Propylenhomopolymerisats und 14 Gew.-Teilen eines Ethylen-Propylen-Copolymerisats mit 50 Gew.-% einpolymerisiertem Ethylen.

Die Zusammensetzung der in den Beispielen 1 - 9 und den Vergleichsbeispielen A - F eingesetzten Polymerisate sowie die erhaltenen Ergebnisse sind in den Tabellen 1 und 2 zusammengestellt.

Die in den Tabellen 1 und 2 aufgeführten Ergebnisse wurden folgendermaßen ermittelt:

### Bestimmung des Schmelzflußindex (MFR):

nach ISO-Norm 1133, bei 230°C und unter einem Gewicht von 2,16 kg.

### Bestimmung des Elastizitätsmoduls (Zug-E-Modul):

nach ISO-Norm 527-2, bei 23°C Meßtemperatur

### Bestimmung der Steifigkeit, Schubmodul (G-Modul):

nach ISO-Norm 6721-2 bei 23°C Meßtemperatur

### Bestimmung der Schlagzähigkeit:

Nach ISO-Norm 179/1eU, bei 23°C, 0°C und -20°C Meßtemperatur.

### Bestimmung des Weißbruchs:

Die Beurteilung des Weißbruchverhaltens erfolgte auf zwei Arten. Bei der Kalottenmethode wurde der Weißbruch mit Hilfe einer Fallbolzenapparatur nach DIN 53 443 Teil 1 ermittelt, wobei ein Fallbolzen mit einer Masse von 250 g, einem Stoßkörper von 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250°C und einer Werkzeugoberflächentemperatur von 30°C spritzgegossen.

Die Prüfung erfolgte bei Temperaturen von 23°C und 60°C, wobei jeder Probekörper nur jeweils einem Stoßversuch unterworfen wurde. Dabei wurde zunächst der Probekörper auf einen Auflagering gelegt, ohne daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

Bei der Bestimmung durch die Volumenmethode wurde die Volumenzunahme bei 23°C während der Verformung durch Zugbeanspruchungen gemessen. Die Methode wurde im Detail von F.Ramsteiner (Acta Polymerica 42, 1991, S.584-589) beschrieben. Die Werte (bestimmt als d(V/V₀)/dε) können zwischen 0 und 1 liegen, wobei niedrige Werte eine geringe Volumenzunahme und damit eine geringe Weißbruchneigung bedeuten.

**Tabelle 1**

| Beispiel | | 1 | 2 | 3 | 4 | 5 | 6 | 7 | 8 | 9 |
|---|---|---|---|---|---|---|---|---|---|---|
| Polymer a) | Gew.- | a1) | a1) | a1) | a1) | a1) | a1) | a1) | a1) | a1) |
| Anteil Polymer a) | Teile | 90 | 85 | 80 | 75 | 90 | 90 | 90 | 90 | 90 |
| Polymer b) | Gew.- | b1) | b1) | b1) | b1) | b2) | b3) | b4) | b5) | b6) |
| Anteil Polymer b) | Teile | 10 | 15 | 20 | 25 | 10 | 10 | 10 | 10 | 10 |
| MFR 230/2, 16^{a)} | g/10min | 12,2 | 10,5 | 10,8 | 9,7 | 11,9 | 13,0 | 12,0 | 11,1 | 13,7 |
| G-Modul^{b)} | MPa | 850 | 740 | 670 | 570 | 780 | 760 | 820 | 790 | 790 |
| Zug-E-Modul^{c)} | MPa | 1580 | 1510 | 1430 | 1280 | 1530 | 1540 | 1510 | 1510 | 1510 |
| Schlagzähigkeit ^{d)} | | | | | | | | | | |
| 23°C | kJ/m² | 152 | NB* | NB* | NB* | 210 | NB* | NB* | 156 | NB* |
| 0°C | kJ/m² | 76 | 114 | 128 | 158 | 73 | 92 | 86 | 81 | 98 |
| -20°C | KJ/m² | 29 | 47 | 59 | 82 | 26 | 28 | 36 | 55 | 38 |
| Weißbruch | | | | | | | | | | |
| Volumenmethode | | 0,23 | 0,18 | 0,16 | 0,19 | 0,21 | 0,23 | 0,19 | 0,30 | 0,21 |
| Kalottenmethode 23°C | | 7,2 | 7,2 | 7,1 | 6,4 | 6,5 | 5,3 | 8,0 | 10,6 | 5,0 |
| Kalottenmethode 60°C | | 7,8 | 7,7 | 7,6 | 7,3 | 9,5 | 10,0 | 11,6 | 12,8 | 9,5 |

| | | | | | | | | | | |
|---|---|---|---|---|---|---|---|---|---|---|
| a) nach ISO-Norm 1133, bei 23°C und 2,16 kg b) nach ISO-Norm 6721-2, bei 23°C c) nach ISO-Norm 527-2, bei 23°C d) nach ISO-Norm 179/1eU *) ohne Bruch | | | | | | | | | | |

**Tabelle 2**

| Vergleichsbeispiele | | A | B | C | D | E | F |
|---|---|---|---|---|---|---|---|
| Polymer a) | | a2) | a2) | a2) | a1) | V₁) | V₂) |
| Anteil Polymer a) | Gew.-% | 90 | 85 | 80 | 90 | 90 | 86 |
| Polymer b) | | b1) | b1) | b1) | b7) | V₁) | V₂) |
| Anteil Polymer b) | Gew.-% | 10 | 15 | 20 | 10 | 10 | 14 |
| MFR 230/2,16^{a)} | g/10min | 9,7 | 9,0 | 8,7 | 10,9 | 6,5 | 15,9 |
| G-Modul^{b)} | MPa | 750 | 680 | 620 | 760 | 620 | 820 |
| Zug-E-Modul^{c)} | MPa | 1430 | 1320 | 1320 | 1500 | 1290 | 1570 |

| Schlagzähigkeit^{d)} | | | | | | | |
|---|---|---|---|---|---|---|---|
| 23°C | kJ/m² | 152 | NB* | NB* | NB* | NB* | 155 |
| 0°C | kJ/m² | 68 | 108 | 126 | 104 | 157 | 94 |
| -20°C | KJ/m² | 21 | 38 | 56 | 62 | 115 | 61 |

| Weißbruch | | | | | | | |
|---|---|---|---|---|---|---|---|
| Volumenmethode | | 0,23 | 0,20 | 0,17 | 0,40 | 0,37 | 0,46 |
| Kalottenmethod 23°C | | 7,3 | 7,2 | 7,0 | 12,6 | 16,3 | 16,2 |
| | | 7,8 | 7,6 | 7,6 | 15,0 | 15,4 | 15,1 |
| Kalottenmethode 60°C | | | | | | | |

| | | | | | | | |
|---|---|---|---|---|---|---|---|
| ^{a)} nach ISO-Norm 1133, bei23°C und 2,16 kg | | | | | | | |
| ^{b)} nach ISO-Norm 6721-2, bei 23°C | | | | | | | |
| ^{c)} nach ISO-Norm 527-2, bei 23°C | | | | | | | |
| ^{d)} nach ISO-Norm 179/1eU | | | | | | | |
| *) ohne Bruch | | | | | | | |

Aus einem Vergleich zwischen den Tabellen 1 und 2 geht u.a. hervor, daß sich die erfindungsgemäßen Propylenpolymerisate (Tabelle 1, Beispiele 1 bis 9) u.a. durch eine verringerte Tendenz zum Weißbruch und durch eine erhöhte Steifigkeit (G-Modul, Zug-E-Modul) auszeichnen.

## Patentansprüche

1. Propylenpolymerisate, enthaltend
a) 50 bis 95Gew -Teile eines Propylenhomopolymerisats mit einem Schmelzflussindex von 0,1 bis 100 g/10 min., bei einer Temperatur von 230 °C und unter einem Gewicht von 2,16 kg, nach ISO-Norm 1133 und einem Isotaktizitätsindex, in Xylol nach ISO-Norm 6427b,von 98,0 bis 99,5 %,
b) 5 bis 50 Gew.-Teile eines Ethylen-Copolymerisats mit 4 bis 40 Gew.-% einpolymerisiertem C₄-C₂₀-Alk-1en, einer Dichte von 0,865 bis 0,920 g/cm³ und einem Schmelzflussindex von 0,1 bis 100 g/10 min, bei 230 °C und unter einem Gewicht on 2,13 kg, nach ISO-Norm 1133 und
c) 0 bis 1,5 Gew.-Teile eines Nukleierungsmittels, wobei die Summe der Gew.-Teile des Propylenhomopolymerisats a) und des Ethylencopolymerisats b) stets 100 Gew.-Teile ergibt.

2. Propylenpolymerisate nach Anspruch 1, enthaltend
a) 75 bis 90 Gew -Teile des Propylenhomopolymerisats a),
b) 10 bis 25 Gew.-Teile des Ethylen-Copolymerisats b)
c) 0,05 bis 1,5 Gew.-Teile eines Nukleierungsmittes c), wobei die Summe der Gew.-Teile des Proplyenhomopolymerisats a) und des Ethylen-Copolymerisats b) stets 100 Gew.-Teile ergibt.

3. Propylenpolymerisate nach den Ansprüchten 1 oder 2, wobei das Propylenhomopolymerisat a) einen Schmelzflussindex von 0,2 bis 50 g/10 min., bei einer Temperatur von 230 °C und unter einem Gewicht von 2,16 kg, nach ISO-Norm 1133, aufweist.

4. Propylenpolymerisate nach den Ansprüchen 1 bis 3, wobei das EthylenCopolymerisat b) eine Dichte von 0,868 bis 0,91 g/cm³ aufweist.

5. Propylenpolymerisate nach den Ansprüchen 1 bis 4, wobei das EthylenCopolymerisat b) als C₄-C₂₀-Alk-1-en, But-1-en, Hex-1-en oder Oct-1-en enthält.

6. Propylenpolymerisate nach den Ansprüchen 1 bis 4, wobei das EthylenCopolymerisat b) 7 bis 30 Gew.-% einpolymerisiertes C₄-C₂₀-Alk-1-en aufweist.

7. Propylenpolymerisate nach den Ansprüchen 1 bis 6, wobei als Nukleierungsmittel c) feinteiliges Talkum verwendet wird.

8. Verfahren zur Herstellung von Propylenpolymersiaten gemäß den Ansprüchen 1 bis 7, **dadurch gekennzeichnet, daß** das Propylenhomopolymerisat a) und das EthylenCopolymerisat b) sowie gegebenenfalls das Nukleierungsmittel c) in einer Mischapparatur bei einer Temperatur von 200 bis 250°C miteinander vermischt werden.

9. Verfahren nach Anspruch 8, **dadurch gekennzeichnet, dass** als Mischapparatur ein Extruder verwendet wird.

10. Verwendung der Propylenpolymerisate gemäß den Ansprüchen 1 bis 7, als Folien, Fasern und Formkörper.

## Claims

1. A propylene polymer containing
a) from 50 to 95 parts by weight of a propylene homopolymer having a melt flow index of from 0.1 to 100 g/10 min., at 230 °C and under a weight of 2.16 kg, according to ISO standard 1133, and an isotacticity index in xylene according to ISO standard 6427b, of from 98.0 to 99.5 %,
b) from 5 to 50 parts by weight of an ethylene copolymer containing from 45 to 40 % by weight of polymerized C₄-C₂₀-alk-1-ene, having a density of from 0.865 to 0.920 g/cm³ and having a melt flow index of from 0.1 to 100 g/10 min, at 230 °C and under a weight of 2.16 kg, according to ISO standard 1133, and
c) from 0 to 1.5 parts by weight of a nucleating agent, the sum of the parts by weight of the propylene homopolymer a) and of the ethylene copolymer b) always being 100 parts by weight.

2. A propylene polymer as claimed in claim 1, containing,
a) from 75 to 90 parts by weight of the propylene homopolymer a),
b) from 10 to 25 parts by weight of the ethylene copolymer b) and
c) from 0.05 to 1.5 parts by weight of a nucleating agent, the sum of the parts by weight of the propylene homopolymer a) and of the ethylene copolymer b) always being 100 parts by weight.

3. A propylene polymer as claimed in claim 1 or 2, wherein the propylene homopoymer a) has a melt flow index of from 0.2 to 50g/10 min. at 230°C and under a weight of 2.16, according to ISO standard 1133.

4. A propylene polymer as claimed in any of claims 1 to 3, wherein the ethylene copolymer b) has a density of from 0.868 to 0.91 g/cm³.

5. A propylene polymer as claimed in any of claims 1 to 4, wherein the ethylene copolymer b) contains but-1-ene, hex-1-ene or oct-1-ene as the C₄-C₂₀-alk-1-ene.

6. A propylene polymer as claimed in any of claims 1 to 5, wherein the ethylene copolymer b) contains from 7 to 30 % by weight of polymerized C₄-C₂₀-alk-1-ene.

7. A propylene polymer as claimed in any of claims 1 to 6, wherein the nucleating agent c) used is finely divided talc.

8. A process for the preparation of a propylene polymer as claimed in any of claims 1 to 7, wherein the propylene homopolymer a) and the ethylene copolymer b) and, if required, the nucleating agent c) are mixed with one another in a mixing apparatus at from 200 to 250°C.

9. A process as claimed in claim 8, wherein the mixing apparatus used is an extruder.

10. The use of a propylene polymer as claimed in any of claims 1 to 7 as a film, fiber or molding.

## Revendications

1. Polymères de propylène, contenant
a) 50 à 95 parties en poids d'un homopolymère de propylène présentant un indice de fusion de 0,1 à 100g/ 10 minutes, à une température de 230 °C et sous un poids de 2,16 kg, selon la norme ISO 1133, et un indice d'isotacticité dans du xylène selon la norme ISO 6427b de 98,0 à 99,5 %,
b) 5 à 50 parties en poids d'un copolymère d'éthylène comportant 4 à 40 % en poids d'un alc-1-ène en C₄-C₂₀ copolymérisé d'une densité de 0,865 à 0,920 g/cm³ et présentant un indice de fusion de 0,1 à 100g/10 minutes à 230°C sous un poids de 2,16 kg, selon la norme ISO 1133, et
c) 0 à 1,5 partie en poids d'un agent de nucléation, la somme des parties en poids de l'homopolymère de propylène a) et du copolymère d'éthylène b) donnant toujours 100 parties en poids.

2. Polymères de propylène suivant la revendication 1, contenant
a) 75 à 90 parties en poids de l'homopolymère de propylène a),
b) 10 à 25 parties en poids du copolymère de éthylène b), et
c) 0,05 à 1,5 partie en poids d'un agent de nucléation c), la somme des parties en poids de l'homopolymère de propylène a) et du copolymère d' éthylène b) donnant toujours 100 parties en poids.

3. Polymères de propylène suivant l'une des revendications 1 et 2, dans lesquels l'homopolymère de propylène a) présente un indice de fusion de 0,2 à 50g/10 minutes, à une température de 230 °C et sous un poids de 2,16 kg, selon la norme ISO 1133.

4. Polymères de propylène suivant l'une des revendications 1 à 3, dans lesquels le copolymère d'éthylène b) présente une densité de 0,868 à 0,91 g/cm³.

5. Polymères de propylène suivant l'une des revendications 1 à 4, dans lesquels le copolymère d'éthylène b) contient, comme alc-1-ène en C₄-C₂₀, du but-1-ène, de l'hex-1-ène ou de I'oct-1-ène.

6. Polymères de propylène suivant l'une des revendications 1 à 5, dans lesquels le copolymère d'éthylène b) présente 7 à 30 % en poids d'un alc-1-ène en C₄-C₂₀ copolymérisé.

7. Polymères de propylène suivant l'une des revendications 1 à 6, dans lesquels, comme agent de nucléation c), on utilise du talc finement divisé.

8. Procédé de préparation de polymères de propylène suivant l'une des revendications 1 à 7, **caractérisé en ce qu'**on mélange l'un avec l'autre l'homopolymère de propylène a) et le copolymère d'éthylène b) ainsi qu'éventuellement l'agent de nucléation c) das un appareil de mélange , à une température de 200 à 250 °C.

9. Procédé suivant la revendication 8, **caractérisé en ce que**, comme appareil de mélange, on utilise une extrudeuse.

10. Utilisation des polymères de propylène suivant l'une des revendications 1 à 7, sous la forme de feuilles, de fibres et de corps façonnés.
